(19) Europäisches Patentamt / European Patent Office / Office européen des brevets

(11) **EP 4 006 402 B1**

(12) **FASCICULE DE BREVET EUROPEEN**

(45) Date de publication et mention
de la délivrance du brevet:
**18.09.2024 Bulletin 2024/38**

(21) Numéro de dépôt: **20306450.6**

(22) Date de dépôt: **26.11.2020**

(51) Classification Internationale des Brevets (IPC):
**F16L 59/02** (2006.01)   **A62C 2/00** (2006.01)
**B32B 5/22** (2006.01)   **F16L 59/08** (2006.01)
**F16L 59/14** (2006.01)

(52) Classification Coopérative des Brevets (CPC):
**F16L 59/029; B32B 1/08; B32B 3/14; B32B 3/20;
B32B 5/18; B32B 5/22; B32B 5/245; B32B 7/027;
B32B 15/046; B32B 15/14; B32B 15/18;
B32B 15/20; B32B 27/065; B32B 27/32;
B32B 27/36;**   (Cont.)

(54) **REVETEMENT DE PROTECTION AU FEU**

FEUERBARRIERESCHICHT

FIRE PROTECTION LAYER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**01.06.2022 Bulletin 2022/22**

(73) Titulaire: **Soletanche Freyssinet
92500 Rueil Malmaison (FR)**

(72) Inventeur: **RAILLARD, Vincent
73240 Avressieux (FR)**

(74) Mandataire: **Plasseraud IP
104 Rue de Richelieu
CS92104
75080 Paris Cedex 02 (FR)**

(56) Documents cités:
**EP-A1- 2 072 087      CN-A- 109 488 838
US-A1- 2015 219 269    US-A1- 2018 250 913**

(52) Classification Coopérative des Brevets (CPC):
(Cont.)
**F16L 59/08; F16L 59/145;** B32B 2260/021;
B32B 2260/046; B32B 2262/10; B32B 2262/101;
B32B 2262/108; B32B 2264/102; B32B 2266/0278;
B32B 2266/057; B32B 2266/102; B32B 2266/126;
B32B 2307/304; B32B 2307/3065;
B32B 2307/7246; B32B 2597/00; F16L 2011/047;
H02G 3/0412

## Description

### Domaine technique

L'invention relève du domaine des revêtements de protection au feu comportant plusieurs couches fibreuses superposées. Ce type de revêtement est notamment utilisé pour recouvrir et protéger des passages de câbles ou tuyauteries.

### Technique antérieure

Des revêtements anti-feu sont notamment connus des documents EP 0 612 540 A1 et FR2973252 A1. Ces revêtements sont notamment utilisés dans des installations industrielles exigeant un niveau de sécurité élevé telles que par exemple les centrales nucléaires ou des usines traitant des produits chimiques.

De tels revêtements doivent permettre d'éviter un échauffement trop rapide des dispositifs qu'ils recouvrent sans toutefois être trop volumineux.

Dans certains cas, il est souhaitable de garantir du côté protégé par le revêtement une température basse, par exemple inférieure à 100°C pendant un temps donné d'exposition à la chaleur d'un feu.

Le document FR2973252A1 précité propose notamment d'incorporer une couche de colle réfractaire entre deux couches fibreuses, la colle comprenant des éléments actifs capables de libérer de l'eau lors d'une élévation de température et de disposer dans la couche de colle un support perméable à la vapeur s'étendant parallèlement aux couches fibreuses et imprégné par la colle réfractaire.

Un revêtement endothermique est par ailleurs connu du document EP 0 820 326 B1 ce revêtement étant utilisé seul pour empêcher une élévation de température au-delà de 100°C du dispositif qu'il protège. L'utilisation d'un matériau endothermique libérant de l'eau permet ainsi de limiter l'élévation de température à 100°C pendant un temps dépendant de la masse de matériau endothermique sur les équipements en cas de feu. Les revêtements endothermiques peuvent aussi être réalisés au moyen d'un système endothermique comportant une colle endothermique appliquée entre des couches de matériau fibreux tels qu'une laine de matériau minéral (laine de roche).

### Problème technique

Ces matériaux ne permettent toutefois pas de réduire encore la température du dispositif protégé au-dessous de 100°C pendant une durée suffisante en utilisant des protections d'épaisseur et de masse restant acceptables. Or pour certains équipements il est souhaité de maintenir, en cas de feu, une température inférieure à 100°C pendant un temps relativement long de l'ordre d'au moins 30mn à une heure tout en utilisant des systèmes de protection relativement légers et souples notamment pour la protection de tuyauteries suspendues.

Par ailleurs, hors feu, les systèmes ou matériaux endothermiques perdent de leur efficacité s'ils sont soumis à des températures importantes tel que celle d'un tuyau contenant un fluide chaud et sont donc inutilisables dans un tel cas.

Dans l'art antérieur, le document US2015/0219269 A1 décrit un matériau d'isolation thermique, comprenant une première couche isolante comprenant un aérogel, et une seconde couche isolante comprenant des fibres inorganiques, la première couche d'isolation sur un côté face au feu du système d'isolation thermique, et la seconde couche d'isolation couche sur un côté non exposé au feu du système d'isolation thermique, une épaisseur de la deuxième couche d'isolation étant supérieure à une épaisseur de la première couche d'isolation et le document US2018/0250913 A1 concerne un composite stratifié d'aérogel comportant une couche d'espacement poreuse, une couche d'aérogel et un support ayant une fonction de réflexion ou d'absorption de rayons thermiques.

### Exposé de l'invention

Au vu de l'art antérieur la présente demande propose un revêtement de protection au feu destiné à réduire la température d'un dispositif tel qu'une tuyauterie au-dessous de 100°C pour une durée suffisante pour intervenir sur l'incendie ou mettre en sécurité les systèmes raccordés, et notamment une durée supérieure à une heure en cas d'incendie dans l'espace autour du dispositif à protéger. La présente invention propose pour ce faire un revêtement de protection au feu d'un dispositif selon la revendication 1 et un procédé de protection au feu d'un dispositif au moyen d'un tel revêtement de protection au feu.

Ainsi, le matériau isolant en température est protégé d'un afflux de vapeur venant du matériau endothermique en cas de feu côté extérieur du revêtement de protection ce qui permet de le maintenir au-dessous d'une température de 100°C tant que le matériau endothermique maintient cette dernière température au niveau de la barrière pare-vapeur.

Les caractéristiques exposées dans les paragraphes suivants correspondent à des modes de réalisation pouvant être mis en oeuvre indépendamment les uns des autres ou en combinaison les uns avec les autres.

Le matériau superisolant est avantageusement un aérogel de silice, un aérogel de polyuréthane ou un matériau microporeux.

La barrière pare-vapeur est avantageusement un film ou une membrane aluminium ou un tissu enduit d'un matériau silicone. Elle doit être de faible épaisseur pour ne pas trop accroître le volume et la masse de la protection et garder ses propriétés pare vapeur et dimensionnelles autour de la température de 100°C pour conserver son efficacité.

La barrière peut aussi être un film ou une membrane en matériau polymère conservant ses propriétés d'étanchéité à une température supérieure à 100°C.

Le matériau endothermique est avantageusement un complexe fibreux comportant des particules sèches de molécules contenant de l'eau libérable à la chaleur telles que des hydrates d'oxydes métalliques ou métalloïdes et/ou de l'hydroxyde de magnésium.

Le matériau endothermique peut être un matériau à réaction endothermique physique, en particulier un matériau à changement de phase ou un matériau endothermique chimique.

Le matériau endothermique peut être constitué de couches de matériau fibreux de type laine minérale collées ensemble par une colle endothermique.

La colle endothermique est avantageusement une colle à base de silicate en phase aqueuse.

L'épaisseur de la ou des couches de matériau endothermique est entre préférablement entre 20cm à 100cm selon les types de feu pouvant se produire dans l'enceinte où se trouve la ou les canalisations ou chemin de câble à protéger et la durée de protection souhaitée.

L'épaisseur de la ou des couches de matériau isolant thermique est préférablement entre 5cm à 40cm pour le matériau superisolant selon la température que l'on souhaite ne pas dépasser au niveau de la ou les canalisations ou chemin de câble à protéger.

Une enveloppe de protection recouvre avantageusement la ou les couches de matériau endothermique.

Des modes de réalisation du procédé se retrouvent dans des revendications dépendantes.

**Brève description des dessins**

D'autres caractéristiques, détails et avantages de l'invention apparaîtront à la lecture de la description détaillée ci-après d'exemples de réalisation non limitatifs, et à l'analyse des dessins annexés, sur lesquels :

Figure 1 montre une vue schématique en coupe transversale d'un conduit recouvert d'une protection avec barrière pare-vapeur selon un premier mode de réalisation ;

Figure 2 montre une vue schématique en coupe longitudinale d'un conduit recouvert d'une protection avec barrière pare-vapeur selon un second mode de réalisation ;

Figure 3A montre un exemple en demi-coupe latérale d'enroulements d'éléments de protection sur un tube sans barrière pare-vapeur ;

Figure 3B montre un exemple en demi-coupe latérale d'enroulements d'éléments de protection sur un tube avec barrière pare-vapeur ;

Figure 4A montre un graphique de de température pour la réalisation de la figure 3A ;

Figure 4B montre un graphique de de température pour la réalisation de la figure 3B ;

Figure 5 montre une vue en perspective d'une réalisation d'enroulements de protection sur un tube.

**Description des modes de réalisation**

Les dessins et la description ci-après contiennent des éléments pouvant non seulement servir à mieux faire comprendre la présente invention, mais aussi contribuer à sa définition, le cas échéant.

L'invention concerne un système protection au feu qui s'applique à l'isolation thermique et la protection au feu de tuyaux, vannes, chemins de câbles. Les systèmes de protection au feu sont destinés à limiter une élévation de température d'un dispositif pendant une durée définie en cas de feu. Comme vu plus haut, l'utilisation d'un système endothermique libérant de l'eau permet de limiter la température à 100°C pendant une durée déterminée dépendant de l'épaisseur du matériau du système sur les équipements en cas de feu mais ne permettent pas de maintenir une température au-dessous de 100°C lorsqu'ils sont soumis au feu.

Pour maintenir une température inférieure à 100°C pendant une durée supérieure à une heure, il convient d'utiliser un matériau de type superisolant thermique c'est-à-dire un matériau de conductivité thermique inférieure à 20mW.m$^{-1}$.K$^{-1}$ . Un tel matériau permet de parfaitement isoler un dispositif et réduire l'épaisseur de la couche isolante par rapport à un matériau isolant de type mousse polyuréthane ou ouate de cellulose. Les matériaux superisolants utilisables sont par exemple un matériau de type aérogel de silice, aérogel de polyuréthane ou un matériau microporeux tel qu'un mélange de silice pyrogénée et d'un opacifiant, soudés ensemble par des filaments ou des oxydes métalliques tels que TiO$_2$. Toutefois même un tel matériau conduit à avoir une épaisseur et une masse de protection importante.

Pour maintenir la masse et le volume de la protection dans des proportions raisonnables, par exemple une masse volumique du complexe comprise entre 130kg/m$^3$ et 500kg/m$^3$ tout en réduisant la température au niveau de l'objet à protéger au-dessous de 100°C pendant une durée supérieure à une heure, la présente invention est basée sur la combinaison d'une protection superisolante et d'une protection endothermique entre lesquelles une barrière pare-vapeur est insérée pour protéger le matériau fortement isolant d'un dégagement de vapeur au niveau du matériau endothermique.

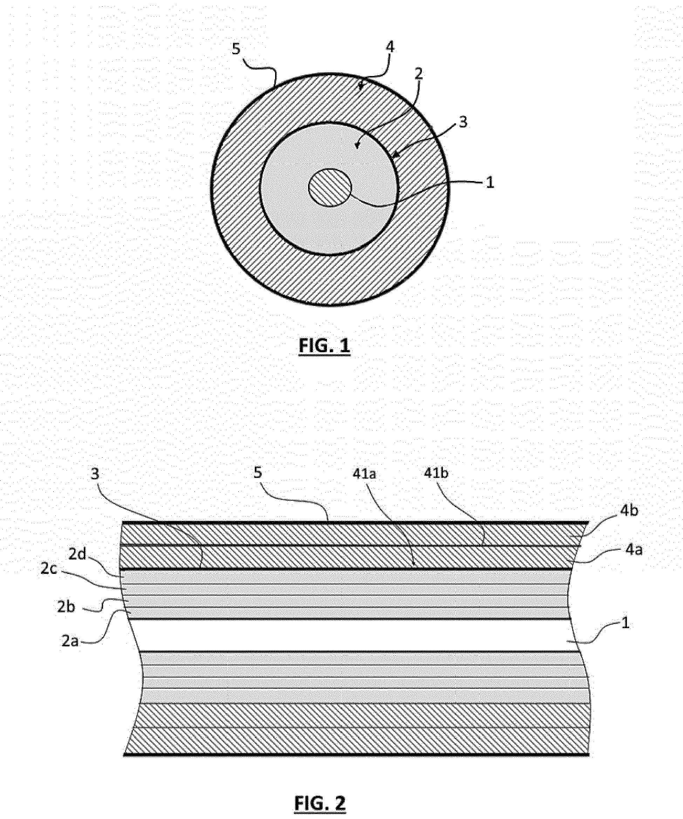

La figure 1 représente en coupe transversale un dispositif 1 tel qu'un tube, par exemple un tube véhiculant un fluide de refroidissement d'un système thermique traversant un local protégé par un revêtement selon l'invention contre un échauffement excessif lors d'un in-

Selon cette figure, la protection comporte une couche de matériau superisolant thermique 2 qui entoure le tube, une barrière pare-vapeur 3, une couche 4 de matériau endothermique 4 et une enveloppe de protection 5. L'enveloppe de protection 5 n'est pas nécessaire à l'invention mais protège le matériau endothermique au plan mécanique.

Le matériau superisolant se présente par exemple sous la forme de plaques juxtaposées appliquées sur le tube ou sous la forme d'une bande enroulée de manière hélicoïdale autour du tube.

Sur la couche de matériau superisolant est positionnée la barrière pare-vapeur 3 qui est une couche fine d'un matériau tel qu'un film ou une membrane aluminium ou un tissu résistant à la chaleur comme un tissu de verre enduit d'un matériau d'étanchéification comme un matériau silicone ou encore un matériau polymère conservant ses propriétés d'étanchéité à une température supérieure à 100°C. Le matériau polymère peut par exemple être un polyester ou un polyéthylène.

La barrière pare-vapeur est recouverte d'une épaisseur de matériau endothermique 4, ce matériau libérant de l'eau lorsqu'il est en contact du feu ce qui limite son échauffement tant que l'eau n'est pas évaporée.

Le matériau endothermique peut être ici un complexe fibreux comportant des particules sèches de molécules contenant de l'eau libérable à la chaleur telles que des hydrates d'oxydes métalliques ou métalloïdes tels que par exemple l'alumine hydratée $Al_2O_3,3H_2O$ ou l'hydroxyde de magnésium $MgO_2,2H_2$ ou un multicouche alternant des épaisseurs de matériau fibreux et des couches de colle endothermique.

En fonction des normes de résistance au feu et du conditionnement des matériaux, les épaisseurs des matériaux peuvent varier et, dans ce cadre, la figure 2 représente une variante en coupe longitudinale où les matériaux sont déposés en plusieurs couches de matériaux sur un tube 1, la protection comporte ainsi quatre couches 2a, 2b, 2c, 2d de matériau superisolant entre le tube et la barrière pare-vapeur 3 ainsi que deux couches de laine minérale 4a, 4b et deux couches de colle endothermique 41a, 41b au-dessus de la barrière pare-vapeur. La première couche de colle est positionnée entre la barrière pare-vapeur 3 et la couche de laine minérale 4a, la seconde entre les couches de laine minérale 4a, 4b.

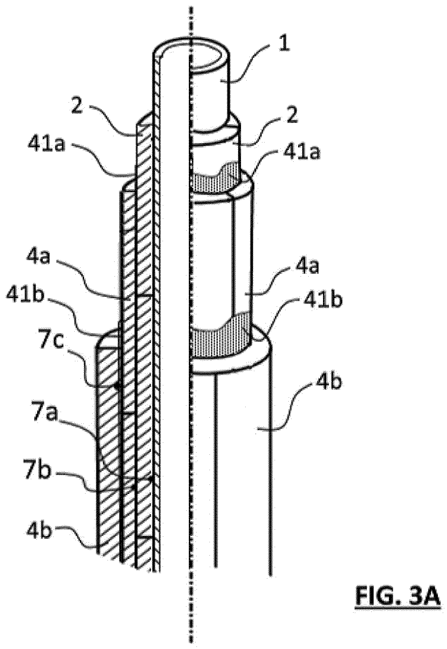

En figure 3A un tube 1 par exemple un tube acier est recouvert d'une seule couche de matériau superisolant 2 par exemple sous la forme de demi-coquilles de matériau microporeux superisolant. Cette couche est recouverte d'une couche de colle endothermique 41a, d'une couche de plaques de matériau fibreux 4a, d'une nouvelle couche de colle endothermique 41b et d'une seconde couche de plaques 4b de matériau fibreux 4b. Les plaques sont disposées en quinconce dans un sens longitudinal et périphérique et appliquées les unes contre les autres dans le but de supprimer les ponts thermiques.

Cette réalisation est équipée de thermocouples, un premier thermocouple 7a sous la couche de matériau superisolant 2, un deuxième thermocouple 7b entre la couche de matériau superisolant 2 et la première couche de matériau endothermique, un troisième thermocouple 7c entre les deux couches du matériau fibreux 4a, 4b.

Les épaisseurs des couches des matériaux sont de l'ordre de 5cm à 50cm et typiquement 6cm à 30cm pour le matériau superisolant et de 20cm à 100cm et typiquement entre 25cm à 80cm pour le matériau fibreux endothermique. Le matériau de la couche de matériau superisolant est ici un matériau microporeux comme vu ci-dessus conformé en demi-coquilles. Le matériau fibreux endothermique est un matériau à base de fibres minérales et particules silicate alcalino-terreux, alumine hydratée ou hydroxyde de magnésium ou encore tout type de matériau à réaction endothermique physique, à changement de phase par exemple ou chimique d'une masse surfacique de 4,5kg/m$^2$ et la colle endothermique est une colle à base de silicate en phase aqueuse. Les courbes représentent la température au niveau du tube en fonction du temps.

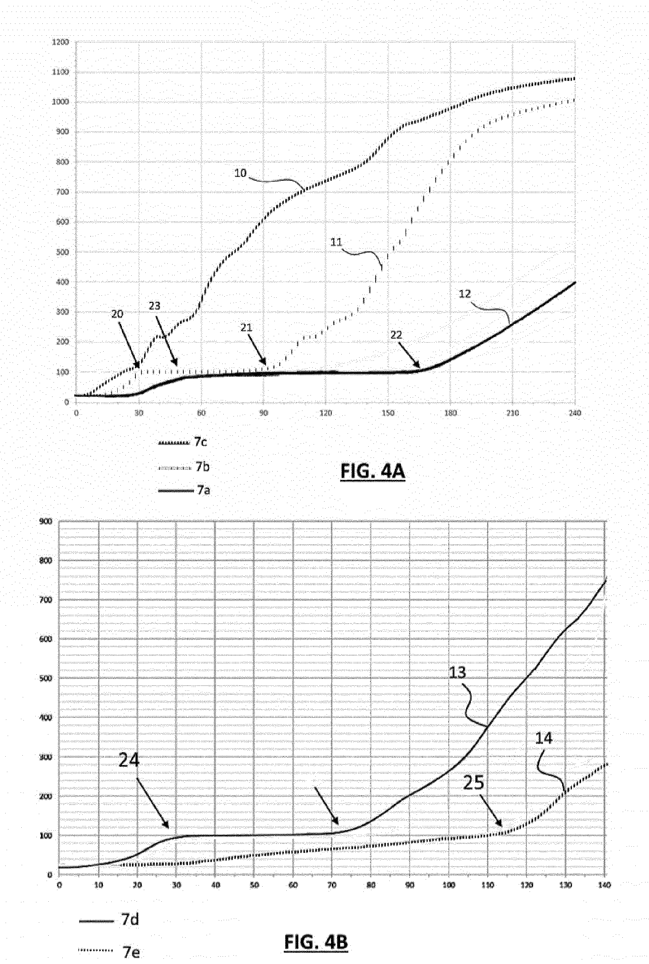

Les courbes de la figure 4A représentent des courbes de température par rapport au temps au niveau des thermocouples 7a, 7b, 7c lors d'un essai pour lequel la température d'essai représente un incendie selon une courbe standardisée ISO 834 dont la température évolue selon l'équation suivante :

$$T = 20 + 345\log_{10}(8t+1)$$

Où

T = Température moyenne du four en degrés Celsius
t = durée en minutes

Pour cet essai, la consigne de pression est en outre de 23 Pa.

Dans cet essai, on constate sur la courbe 10 que la température du matériau endothermique au niveau du thermocouple 7c entre les couches de matériau endothermique monte rapidement. Selon la courbe 11, la température au niveau du thermocouple 7b monte pour arriver au bout de 30mn au pallier 20 à une température de 100°C jusqu'au début de la dégradation complète du matériau endothermique au point d'inflexion 21 vers 90mn. La libération d'eau dans le matériau fibreux par la colle endothermique limite l'accroissement de température tant qu'il y a de l'eau produisant de la vapeur dans ce matériau. Ensuite, la température au niveau de ce thermocouple 7b se met à croître jusqu'à atteindre la température de l'incendie. Selon la courbe 12, au niveau du thermocouple 7a en contact avec le tube sous le matériau superisolant on constate que la température monte à 100°C au point d'inflexion 23 vers 40 secondes, se maintient vers 100°C jusqu'au point d'inflexion 22 vers environ 160 secondes puis croît. On constate dans ce cas que le matériau superisolant n'arrive pas à limiter la température suffisamment longtemps au-dessous de 100°C du fait de la migration d'eau dans ce matériau.

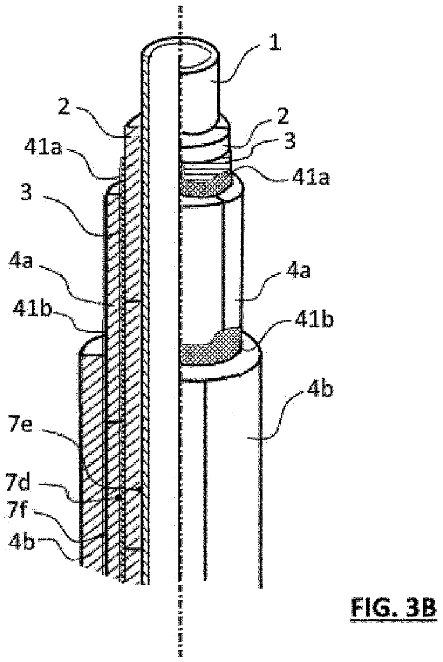

Le dispositif de la figure 3B est une protection pour laquelle une barrière pare-vapeur 3 est intercalées entre une couche de matériau superisolant 2 et le matériau endothermique constitué de deux couches de laine minérale 4a, 4b et de deux couches de colle 41a, 41b comme pour la figure 3A. La laine minérale se présente ici aussi sous forme de plaques juxtaposées. Un thermocouple 7d est disposé côté couche 4a de matériau endothermique au niveau de la barrière pare-vapeur 3, un thermocouple 7e est disposé entre la couche de matériau superisolant et le tube 1 et un thermocouple 7f est disposé entre les couches de laine 4a, 4b.

Les essais de cette configuration avec barrière pare-vapeur sont repris dans le graphique 48 où la température au niveau du thermocouple 7f entre couches endothermiques n'a pas été représentée car similaire à celle du graphique 4A. Selon la courbe 13 correspondant au thermocouple 7d il y a toujours un palier à 100°C entre un point d'inflexion 24 à environ 30mn et un point d'inflexion 26 vers 80mn correspondant à une libération de vapeur dans le matériau endothermique. Par contre selon la courbe 14 au niveau du thermocouple 7e on constate que la température croît pratiquement linéairement entre 30mn et 110mn d'exposition au feu au niveau du tube 1 pour atteindre 100°C puis croît fortement après un point d'inflexion 25. Ceci vient du fait que, grâce à la barrière pare-vapeur, l'eau libérée par le matériau endothermique ne migre pas dans le matériau superisolant thermique qui conserve ses propriétés d'isolement tant qu'il n'est pas lui-même attaqué par les flammes.

Ainsi tant que le matériau endothermique maintient la température à 100°C au niveau de la barrière et même au-delà, le matériau superisolant en contact avec le tube 1 voit sa température croître pratiquement linéairement vers 100°C entre 30mn et 110mn. L'efficacité du matériau superisolant n'est pas dégradée du fait de l'absence de migration d'eau.

L'efficacité de la protection est donc accrue par rapport à la combinaison des deux matériaux sans pare-vapeur.

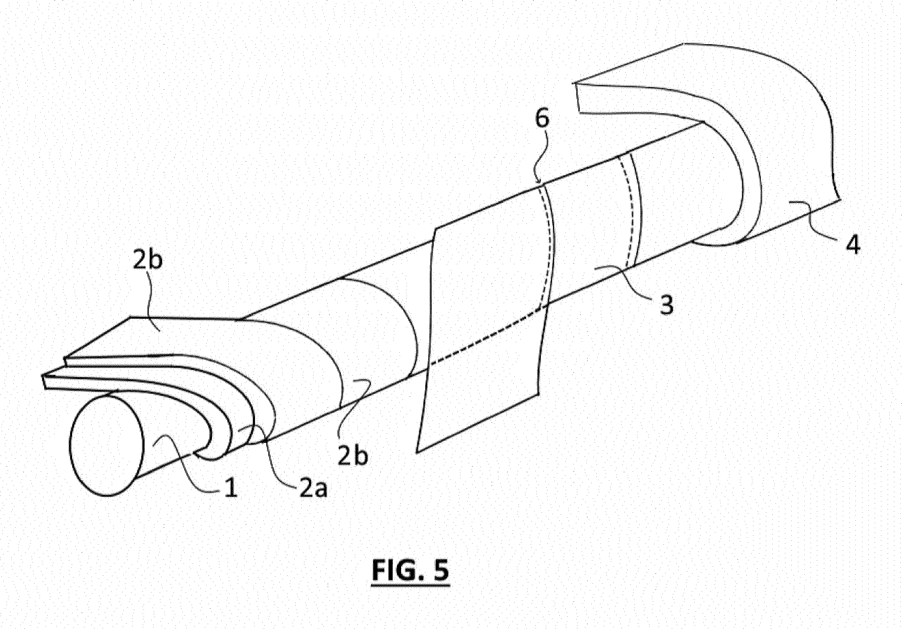

La figure 5 pour sa part montre schématiquement un exemple de réalisation partiellement déconstruit ou les matériaux sont sous forme de bandes sur un tube 1.

Selon ce mode de réalisation, deux bandes de matériau superisolant 2a, 2b sont enroulées en hélice sur le tube et en décalage entre les épaisseurs en sorte de recouvrir les joints entre les sections d'hélice juxtaposées. La barrière 3, film ou tissu enduit, est enroulée en hélice avec recouvrement 6 des bords consécutifs et le matériau endothermique 4 est lui-même enroulé en hélice.

L'invention ne se limite pas aux exemples décrits ci-avant, seulement à titre d'exemple, mais elle englobe toutes les variantes que pourra envisager l'homme de l'art dans le cadre des revendications.

## Revendications

1. - Revêtement de protection au feu d'un dispositif (1) comportant une ou plusieurs couches (2, 2a, 2b, 2c, 2d) de matériau isolant en température (2) de couverture dudit dispositif, **caractérisé en ce qu'**il comporte une barrière pare-vapeur (3) recouvrant lesdites couches de matériau isolant en température et une ou plusieurs couches (4a, 4b, 4c, 4d) de matériau endothermique (4) libérant de l'eau au contact du feu, recouvrant ladite barrière pare-vapeur et pour lequel le matériau isolant en température (2) est un matériau de conductivité thermique inférieure à 20mW.m$^{-1}$.K$^{-1}$ dit superisolant.

2. - Revêtement de protection au feu selon la revendication 1 pour lequel le matériau superisolant est un aérogel de silice, un aérogel de polyuréthane ou un matériau microporeux.

3. - Revêtement de protection au feu selon la revendication 1 ou 2, pour lequel la barrière pare-vapeur (3) est un film ou une membrane en aluminium ou en polymère conservant ses propriétés d'étanchéité à une température d'au moins 100°C ou est un tissu enduit d'un matériau silicone.

4. - Revêtement de protection au feu selon la revendication 1 à 3 pour lequel le matériau endothermique (4) est un matériau à réaction endothermique physique, en particulier un matériau à changement de phase ou un matériau endothermique chimique.

5. - Revêtement de protection au feu selon l'une quelconque des revendications précédentes pour lequel le matériau endothermique (4) est un complexe fibreux comportant des particules sèches de molécules contenant de l'eau libérable à la chaleur telles que des hydrates d'oxydes métalliques ou métalloïdes, de l'alumine hydratée et/ou de l'hydroxyde de magnésium.

6. - Revêtement de protection au feu selon l'une quelconque des revendications 1 à 4 pour lequel le matériau endothermique (4) est constitué de couches de matériau fibreux de type laine minérale collées ensemble par une colle endothermique.

7. - Revêtement de protection au feu selon la revendication 6 pour lequel la colle endothermique est une colle à base de silicate en phase aqueuse.

8. - Revêtement de protection au feu selon l'une quelconque des revendications précédentes pour lequel l'épaisseur de la ou des couches de matériau endothermique (4a, 4b, 4c, 4d) est entre 20cm et 100cm.

9. - Revêtement de protection au feu selon l'une quelconque des revendications précédentes pour lequel l'épaisseur de la ou des couches (2, 2a, 2b, 2c, 2d) de matériau isolant thermique est entre 5cm et 40cm.

10. - Revêtement de protection au feu selon l'une quelconque des revendications précédentes pour lequel une enveloppe de protection (5) recouvre la ou les couches de matériau endothermique.

11. - Procédé de protection au feu d'un dispositif au moyen d'un revêtement de protection au feu selon l'une quelconque des revendications précédentes **caractérisé en ce qu'**il comporte un dépôt d'une ou plusieurs couches dudit matériau superisolant sur le dispositif, un positionnement de la barrière pare vapeur sur le matériau superisolant, un dépôt d'une ou plusieurs couches dudit matériau endothermique sur la barrière pare vapeur.

12. - Procédé de protection au feu d'un dispositif selon la revendication 11 comportant le dépôt de quatre couches (2a, 2b, 2c, 2d) dudit matériau superisolant entre le dispositif et la barrière pare-vapeur (3), lesdites couches dudit matériau endothermique comportant deux couches de laine minérale (4a, 4b) et deux couches de colle endothermique (41a, 41b) au-dessus de la barrière pare-vapeur, la première couche de colle étant positionnée entre la barrière pare-vapeur (3) et la couche de laine minérale (4a), la seconde entre lesdites couches de laine minérale (4a, 4b).

13. - Procédé de protection au feu d'un dispositif selon la revendication 11 pour lequel le dispositif est un tube (1) recouvert d'une seule couche de matériau superisolant (2) sous la forme de demi-coquilles de matériau microporeux superisolant, ladite couche de matériau superisolant étant recouverte d'une couche de colle endothermique (41a), d'une couche de plaques de matériau fibreux (4a), d'une nouvelle couche de colle endothermique (41b) et d'une seconde couche de plaques (4b) de matériau fibreux.

14. - Procédé de protection au feu d'un dispositif selon la revendication 13 pour lequel les plaques de matériau fibreux sont disposées en quinconce dans un sens longitudinal et périphérique et appliquées les unes contre les autres.

15. - Procédé de protection au feu d'un dispositif selon la revendication 11 pour lequel le matériau superisolant se présente sous la forme de plaques juxtaposées appliquées sur le dispositif.

16. - Procédé de protection au feu d'un dispositif selon la revendication 11 pour lequel le dispositif étant un tube, le matériau superisolant se présente sous la forme d'une bande enroulée de manière hélicoïdale autour du dispositif sur lequel sont disposées la barrière pare vapeur puis les couches dudit matériau endothermique.

**Patentansprüche**

1. Brandschutzbeschichtung einer Vorrichtung (1), umfassend eine oder mehrere Schichten (2, 2a, 2b, 2c, 2d) aus temperaturisolierendem Material (2) zur Abdeckung der Vorrichtung, **dadurch gekennzeichnet, dass** sie eine Dampfsperre (3) umfasst, die die Schichten aus temperaturisolierendem Material bedeckt, und eine oder mehrere Schichten (4a, 4b, 4c, 4d) aus endothermem Material (4) umfasst, das bei Kontakt mit Feuer Wasser freisetzt, welches die Dampfsperre bedeckt, und wobei das temperaturisolierende Material (2) ein Material mit einer Wärmeleitfähigkeit von weniger als 20 mW.m$^{-1}$.K$^{-1}$ ist, das als superisolierend bezeichnet wird.

2. Brandschutzbeschichtung nach Anspruch 1, wobei das superisolierende Material ein Silica-Aerogel, ein Polyurethan-Aerogel oder ein mikroporöses Material ist.

3. Brandschutzbeschichtung nach Anspruch 1 oder 2, wobei die Dampfsperre (3) eine Folie oder Membran aus Aluminium oder einem Polymer ist, die ihre Dichtungseigenschaften bei einer Temperatur von wenigstens 100 °C beibehält, oder ein mit einem Silikonmaterial verstärktes Gewebe ist.

4. Brandschutzbeschichtung nach Anspruch 1 bis 3, wobei das endotherme Material (4) ein Material mit physikalisch endothermer Reaktion ist, insbesondere ein Phasenwechselmaterial oder ein chemisch endothermes Material.

5. Brandschutzbeschichtung nach einem der vorhergehenden Ansprüche, wobei das endotherme Material (4) ein Faserkomplex ist, umfassend trockene Partikel aus wärmefreisetzbaren wasserhaltigen Molekülen wie Metalloxid- oder Metalloidhydraten, Aluminiumoxidhydrat und/oder Magnesiumhydroxid.

6. Brandschutzbeschichtung nach einem der Ansprüche 1 bis 4, wobei das endotherme Material (4) aus Schichten aus Fasermaterial vom Typ Mineralwolle besteht, die mit einem endothermen Klebstoff zusammengeklebt sind.

7. Brandschutzbeschichtung nach Anspruch 6, wobei der endotherme Klebstoff ein wasserbasierter Silikatkleber ist.

8. Brandschutzbeschichtung nach einem der vorhergehenden Ansprüche, wobei die Dicke der Schicht(en) aus endothermem Material (4a, 4b, 4c, 4d) zwischen 20 cm und 100 cm beträgt.

9. Brandschutzbeschichtung nach einem der vorhergehenden Ansprüche, wobei die Dicke der Schicht(en) (2, 2a, 2b, 2c, 2d) aus wärmeisolierendem Material zwischen 5 cm und 40 cm beträgt.

10. Brandschutzbeschichtung nach einem der vorhergehenden Ansprüche, wobei eine Schutzhülle (5) die Schicht(en) aus endothermem Material umgibt.

11. Verfahren zum Brandschutz einer Vorrichtung mittels einer Brandschutzbeschichtung nach einem der vorhergehenden Ansprüche, **dadurch gekennzeichnet, dass** es ein Aufbringen einer oder mehrerer Schichten des superisolierenden Materials auf die Vorrichtung, ein Positionieren der Dampfsperre auf dem superisolierenden Material, ein Aufbringen einer oder mehrerer Schichten des endothermen Materials auf die Dampfsperre umfasst.

12. Verfahren zum Brandschutz einer Vorrichtung nach Anspruch 11, umfassend das Aufbringen von vier Schichten (2a, 2b, 2c, 2d) des superisolierenden Materials zwischen der Vorrichtung und der Dampfsperre (3), wobei die Schichten des endothermen Materials zwei Schichten aus Mineralwolle (4a, 4b) und zwei Schichten aus endothermem Klebstoff (41a, 41b) über der Dampfsperre umfassen, wobei die erste Klebstoffschicht zwischen der Dampfsperre (3) und der Mineralwollschicht (4a) und die zweite zwischen den Mineralwollschichten (4a, 4b) positioniert ist.

13. Verfahren zum Brandschutz einer Vorrichtung nach Anspruch 11, wobei die Vorrichtung ein Rohr (1) ist, das mit einer einzigen Schicht aus superisolierendem Material (2) in Form von Halbschalen aus superisolierendem mikroporösem Material bedeckt ist, wobei die Schicht aus superisolierendem Material mit einer Schicht aus endothermem Klebstoff (41a), einer Schicht aus Platten aus Fasermaterial (4a), einer weiteren Schicht aus endothermem Klebstoff (41b) und einer zweiten Schicht aus Platten (4b) aus Fasermaterial bedeckt ist.

14. Verfahren zum Brandschutz einer Vorrichtung nach Anspruch 13, wobei die Platten aus Fasermaterial in einer Längs- und Umfangsrichtung versetzt angeordnet sind und aneinander anliegen.

15. Verfahren zum Brandschutz einer Vorrichtung nach Anspruch 11, wobei das superisolierende Material in Form von nebeneinander liegenden Platten vorliegt, die auf die Vorrichtung aufgebracht werden.

16. Verfahren zum Brandschutz einer Vorrichtung nach Anspruch 11, wobei die Vorrichtung ein Rohr ist und das superisolierende Material in Form eines Streifens vorliegt, der schraubenförmig um die Vorrichtung gewickelt ist, auf der die Dampfsperre und dann die Schichten des endothermen Materials angeordnet sind.

**Claims**

1. A fire protection coating for a device (1) including one or more layers (2, 2a, 2b, 2c, 2d) of temperature insulating material (2) covering said device, **characterised in that** it includes a vapour barrier (3) covering said layers of temperature insulating material and one or more layers (4a, 4b, 4c, 4d) of endothermic material (4) releasing water upon contact with the fire, covering said vapour barrier and for which the temperature insulating material (2) is a material with a thermal conductivity less than $20mW.m^{-1}.K^{-1}$ called superinsulating material.

2. The fire protection coating according to claim 1 for which the superinsulating material is a silica aerogel, a polyurethane aerogel or a microporous material.

3. The fire protection coating according to claim 1 or 2, for which the vapour barrier (3) is a film or membrane made of aluminium or polymer retaining its sealing properties at a temperature of at least 100°C or is a fabric coated with a silicone material.

4. The fire protection coating according to claim 1 to 3, for which the endothermic material (4) is a material with a physical endothermic reaction, in particular a phase change material or a chemical endothermic material.

5. The fire protection coating according to any one of the preceding claims for which the endothermic material (4) is a fibrous complex including dry particles of molecules containing heat-releasable water such as metal oxide hydrates or metalloids, hydrated alumina and/or magnesium hydroxide.

6. The fire protection coating according to any one of claims 1 to 4 for which the endothermic material (4) consists of layers of fibrous material of the mineral wool type bonded together by an endothermic adhesive.

7. The fire protection coating according to claim 6 for which the endothermic adhesive is an adhesive based on silicate in an aqueous phase.

8. The fire protection coating according to any one of the preceding claims for which the thickness of the layer(s) of endothermic material (4a, 4b, 4c, 4d) is between 20cm and 100cm.

9. The fire protection coating according to any one of the preceding claims for which the thickness of the layer(s) (2, 2a, 2b, 2c, 2d) of thermal insulating material is between 5cm and 40cm.

10. The fire protection coating according to any one of the preceding claims for which a protective envelope (5) covers the layer(s) of endothermic material.

11. A method for protecting a device from fire by means of a fire protection coating according to any one of the preceding claims **characterised in that** it includes a deposition of one or more layers of said superinsulating material on the device, positioning the vapour barrier on the superinsulating material, depositing one or more layers of said endothermic material on the vapour barrier.

12. The method for protecting a device from fire according to claim 11 including the deposition of four layers (2a, 2b, 2c, 2d) of said superinsulating material between the device and the vapour barrier (3), said layers of said endothermic material including two layers of mineral wool (4a, 4b) and two layers of endothermic adhesive (41a, 41b) above the vapour barrier, the first layer of adhesive being positioned between the vapour barrier (3) and the mineral wool layer (4a), the second between said mineral wool layers (4a, 4b).

13. The method for protecting a device from fire according to claim 11 for which the device is a tube (1) covered with a single layer of superinsulating material (2) in the form of half-shells of superinsulating microporous material, said layer of superinsulating material being covered with a layer of endothermic adhesive (41a), a layer of plates of fibrous material (4a), a new layer of endothermic adhesive (41b) and a second layer of plates (4b) of fibrous material.

14. The method for protecting a device from fire according to claim 13 for which the plates of fibrous material are disposed staggered in a longitudinal and peripheral direction and applied against each other.

15. The method for protecting a device from fire according to claim 11 for which the superinsulating material is in the form of juxtaposed plates applied to the device.

16. The method for protecting a device from fire according to claim 11 for which the device being a tube, the superinsulating material is in the form of a strip wound helically around the device on which the vapour barrier then the layers of said endothermic material are disposed.

**FIG. 1**

**FIG. 2**

**FIG. 3A**

FIG. 3B

**FIG. 4A**

**FIG. 4B**

**FIG. 5**

EP 4 006 402 B1

**EP 4 006 402 B1**

## RÉFÉRENCES CITÉES DANS LA DESCRIPTION

**Documents brevets cités dans la description**

- EP 0612540 A1
- FR 2973252 A1
- EP 0820326 B1
- US 20150219269 A1
- US 20180250913 A1